# EUROPEAN PATENT APPLICATION

(11) **EP 3 128 746 A1**
(43) Date of publication of application: **08.02.2017**
(21) Application number: 15773449.2
(22) Date of filing: 25.03.2015
(51) Int. Cl.: H04N 7/15, G06F 13/00, H04M 3/56

(54) **TRANSMISSION TERMINAL, TRANSMISSION SYSTEM, AND SELECTION METHOD FOR RELAY DEVICE**

(30) Priority: 31.03.2014 JP 2014072940
(71) Applicant: Ricoh Company, Ltd., Tokyo 143-8555 (JP)
(72) Inventor: KANDA, Hiroyuki, Tokyo 143-8555 (JP); ASAI, Takahiro, Tokyo 143-8555 (JP)
(74) Representative: Schwabe - Sandmair - Marx
(86) International application number: PCT/JP2015/059121
(87) International publication number: WO 2015/151958

(57) **Abstract**

[Object]

To transmit and receive high-quality data in a well-balanced manner upon performing communication between transmission terminals via a relay device.

[Means of Achieving the Object]

A transmission terminal transmits and receives content data via one of a plurality of relay devices. A storage unit stores first priority level information indicative of a priority level regarding use of each of the plurality of relay devices when used by the transmission terminal. A reception unit receives second priority level information indicative of a priority level regarding use of each of the relay devices when used by another transmission terminal, the second priority level information being transmitted by the other transmission terminal. A selection unit selects, based on the first priority level information and the second priority level information, one of the relay devices as a relay device to use.

## Description

### TECHNICAL FIELD

The present invention relates to a technique of selecting a relay device that relays content data.

### BACKGROUND ART

As an example of a transmission system for transmitting and receiving content data among a plurality of transmission terminals via a relay device, there are video conference systems for holding a video conference via a communication network such as the Internet. Because it is possible to hold a conference with a plurality of persons present in different places by using the video conference system, costs of business trips and time spent in business trips can be reduced. Accordingly, the necessity for video conference systems has increased. The video conference system uses a plurality of video conference terminals as transmission terminals. A video conference is realized by transmitting and receiving image data and sound data among the video conference terminals.

Thanks to the improvement of broadband environments in recent years, it is possible to transmit and receive image data having high image quality and sound data having high sound quality. In accordance with this, it is easy to understand a situation of a member in the video conference and achievement of communication through conversation has improved.

However, in a case where a video conference is held among many members via a communication network, or in a case where image data and sound data are received using a narrowband channel on the communication network, reception of the image data and the sound data may be delayed. Users of the video conference system are said to feel stress during a conversation if the reception of the image data and the sound data is delayed for 0.5 seconds or more. Accordingly, video conferences satisfactory for the users may not be possible even in the broadband environments that have improved in recent years.

Further, in video conference systems of recent years, a relay device for relaying image data and sound data among video conference terminals is disposed in many cases for each Local Area Network (LAN) on the communication network. These relay devices can distribute communication processing in a video conference and reduce load applied to each relay device. Further, it is possible to distribute a data transmission quantity for image data and sound data to be relayed.

In the related art, in order to select and use one relay device among a plurality of relay devices, a relay device connected to the same LAN as connected to a video conference terminal that holds a video conference is used. In other words, by selecting a relay device having an IP address close to an IP address of the video conference terminal, image data having high image quality is transmitted and received via the selected relay device (see Patent Document 1)

### DISCLOSURE OF THE INVENTION

### PROBLEM TO BE SOLVED BY INVENTION

However, communication in a video conference or the like may be performed not only among users within the same region of a single country but also among users in a plurality of distant regions in the same country, for example. Further, communication may also be performed among users in distant places such as different countries.

In a case where users in two remote places hold a video conference, if a relay device close to a transmission terminal such as a video conference terminal on one side is selected, the selected relay device is remote from a transmission terminal on the other side. In this situation, high-quality content data may not be transmitted or received in a well-balanced manner under an actual communication network environment.

### MEANS FOR SOLVING PROBLEM

According to one embodiment, there is provided a transmission terminal configured to transmit and receive content data via one of a plurality of relay devices. The transmission terminal includes a storage unit configured to store first priority level information indicative of a priority level regarding use of each of the plurality of relay devices when used by the transmission terminal; a reception unit configured to receive second priority level information indicative of a priority level regarding use of each of the relay devices when used by another transmission terminal, the second priority level information being transmitted by the other transmission terminal; and a selection unit configured to select, based on the first priority level information and the second priority level information, one of the relay devices as a relay device to use.

According to another embodiment, there is provided a selection method for selecting a relay device to be used by a transmission terminal, the transmission terminal being configured to transmit and receive content data via one of a plurality of relay devices. The selection method includes creating first priority level information indicative of a priority level regarding use of each of the plurality of relay devices when used by the transmission terminal; receiving, from another transmission terminal, second priority level information indicative of a priority level regarding use of each of the relay devices when used by the other transmission terminal; and selecting, based on the first priority level information and the second priority level information, one of the relay devices as a relay device to use.

### EFFECT OF INVENTION

According to an embodiment, when a relay device to use is selected, the relay device is selected in consideration of not only priority level information when the relay device is used by its own terminal but also priority level information when the relay device is used by another transmission terminal. Accordingly, it is possible to transmit and receive high-quality content data in a well-balanced manner upon performing communication between both transmission terminals.

### BRIEF DESCRIPTION OF THE DRAWINGS

FIG. 1 is a diagram illustrating a configuration of a transmission system according to an embodiment of the present invention;
FIG. 2 is a diagram illustrating data communication in a transmission system;
FIG. 3A is a diagram illustrating image quality of low-resolution image data;
FIG. 3B is a diagram illustrating image quality of medium-resolution image data;
FIG. 3C is a diagram illustrating image quality of high-resolution image data;
FIG. 4 is a perspective view of a terminal according to an embodiment;
FIG. 5 is a block diagram of a hardware configuration of a terminal according to an embodiment;
FIG. 6 is a block diagram of a hardware configuration of a management system, a relay device, or a program providing system according to an embodiment;
FIG. 7 is a functional block diagram of each terminal, a device, and a system constituting a transmission system according to an embodiment;
FIG. 8 is block diagram illustrating functions of a selection unit;
FIG. 9A is a diagram illustrating an example of a priority list of relay devices;
FIG. 9B is a diagram illustrating another example of a priority list of relay devices;
FIG. 10 is a diagram illustrating a quality change management table;
FIG. 11 is a diagram illustrating an authentication management table;
FIG. 12 is a diagram illustrating a terminal management table;
FIG. 13 is a diagram illustrating a destination list management table;
FIG. 14 is a diagram illustrating a session management table;
FIG. 15 is a diagram illustrating a quality management table;
FIG. 16 is a sequence diagram illustrating a preparation stage process to start remote communication among terminals;
FIG. 17 is a sequence diagram illustrating a process to narrow down relay devices;
FIG. 18 is a sequence diagram illustrating a process by which a transmission terminal selects a relay device;
FIG. 19 is a flowchart of a process by which a transmission terminal selects a relay device; and
FIG. 20 is a sequence diagram of a process to transmit and receive image data and sound data between transmission terminals.

### EMBODIMENTS FOR CARRYING OUT THE INVENTION

In the following, embodiments of the present invention are described with reference to the accompanying drawings.

### <<Overall structure of embodiments>>

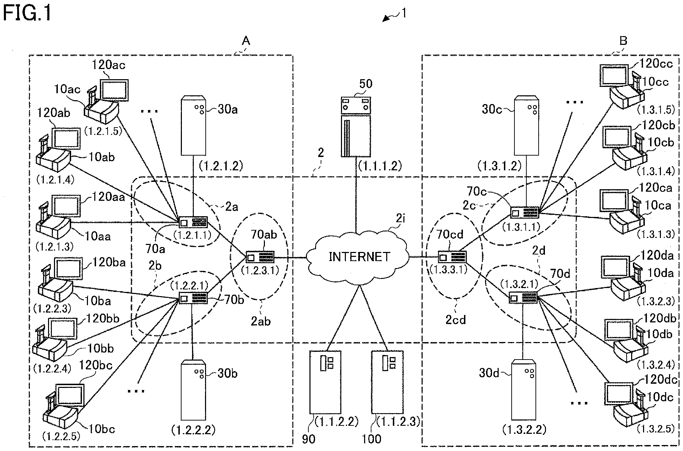

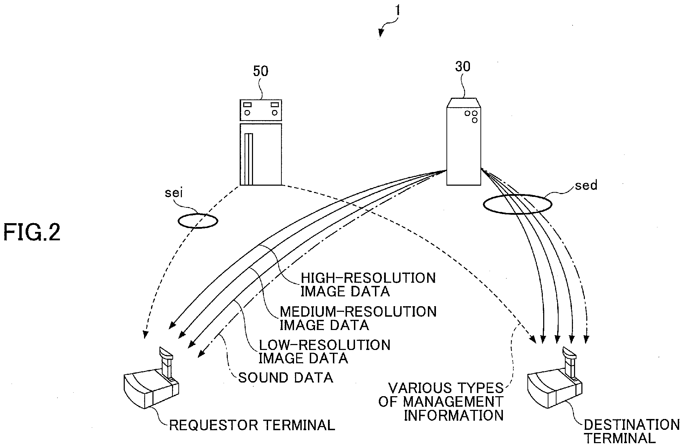

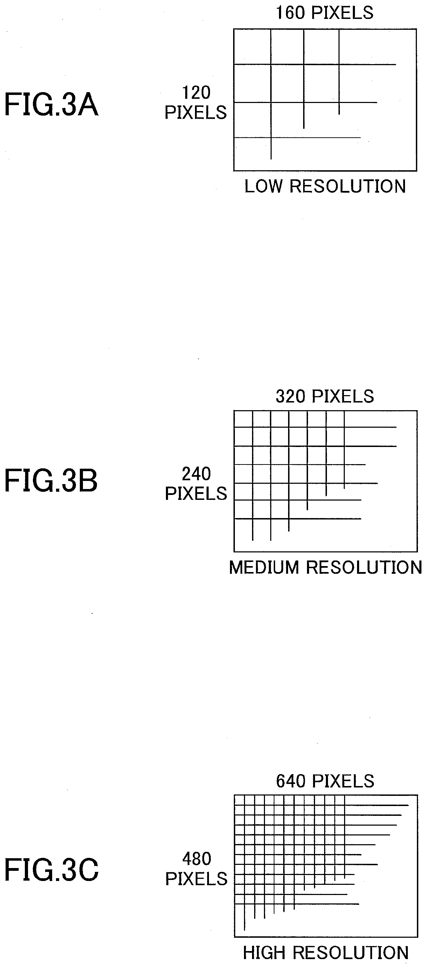

Fig. 1 is a diagram illustrating a configuration of a transmission system according to an embodiment of the present invention. FIG. 2 is a diagram illustrating data communication in the transmission system. FIG. 3A is a diagram illustrating image quality of low-resolution image data. FIG. 3B is a diagram illustrating image quality of medium-resolution image data. FIG. 3C is a diagram illustrating image quality of high-resolution image data;

The transmission system includes a data providing system that transmits content data in one direction from one transmission terminal to another transmission terminal via a transmission managing system and also includes a communication system that mutually communicates information, feelings, and the like among a plurality of transmission terminals via the transmission managing system. The communication system is a system for mutually transmitting information, feelings, and the like among a plurality of communication terminals via a communication managing system. Examples of the communication system include a video conference system and a video phone system.

In the following, the transmission system, the transmission managing system, and the transmission terminal are described on the assumption that the video conference system is an example of the communication system, a video conference managing system is an example of the communication managing system, and a video conference terminal is an example of the communication terminal. In other words, the transmission system, the transmission managing system, and the transmission terminal of the present invention are not limited to the embodiment.

A transmission system 1 illustrated in FIG. 1 includes a plurality of transmission terminals 10aa, 10ab,..., displays 120aa, 120ab,... for the transmission terminals 10aa, 10ab,..., a plurality of relay devices 30a, 30b, 30c, and 30d, a management system 50, a program providing system 90, and a maintenance system 100.

The plurality of transmission terminals 10 transmit and receive image data and sound data as an example of content data.

In the following, the "transmission terminal" may be simply referred to as a "terminal" and the "transmission managing system" may be simply referred to as a "management system." Further, a given terminal among the plurality of terminals 10aa, 10ab,... may be referred to as a "terminal 10." A given display among the plurality of displays (120aa, 120ab,...) may be referred to as a "display 120." A given relay device among the plurality of relay devices 30a, 30b, 30c, and 30d may be referred to as a "relay device 30." Further, a terminal that sends a request to start a video conference as a requestor may be referred to as a "requestor terminal" and a terminal to which the request is sent as a request destination (relay destination) may be referred to as a "destination terminal."

As illustrated in FIG. 2, in the transmission system 1, a management information session "sei" for transmitting and receiving various types of management information is established between the requestor terminal and the destination terminal via the management system 50. Further, between the requestor terminal and the destination terminal, four sessions for transmitting and receiving four types of data including high-resolution image data, medium-resolution image data, low-resolution image data, and sound data are established via the relay device 30. These four sessions are collectively referred to as an image and sound data session "sed" in the embodiment.

In the following, resolution of an image represented with image data handled in the embodiment is described. A low-resolution image is a base image and has 160 pixels in the lateral direction and 120 pixels in the longitudinal direction as illustrated in FIG. 3A. A medium-resolution image has 320 pixels in the lateral direction and 240 pixels in the longitudinal direction as illustrated in FIG. 3B. A high-resolution image has 640 pixels in the lateral direction and 480 pixels in the longitudinal direction as illustrated in FIG. 3C. In a case where a narrowband channel is used, image data having low image quality including only low-resolution image data to be used as the base image is relayed. In a case where a bandwidth is relatively wide, image data having medium image quality including the low-resolution image data to be used as the base image and medium-resolution image data is relayed. Further, in a case where the bandwidth is very wide, image data having high image quality including the low-resolution image data to be used as the base image, the medium-resolution image data, and high-resolution image data is relayed.

The relay device 30 illustrated in FIG. 1 relays content data among a plurality of terminals 10. The management system 50 manages log-in authentication from the terminal 10, a call state of the terminal 10, a destination list, a communication state of the relay device 30, and the like in an integrated manner. In addition, an image represented with image data may be a movie or a still image, or may include both the movie and the still image.

Each of a plurality of routers 70a, 70b, 70c, 70d, 70ab, and 70cd selects an optimum path for image data and sound data. In the following, a given router among the routers 70a, 70b, 70c, 70d, 70ab, and 70cd may be referred to as a "router 70."

The program providing system 90 includes a Hard Disk (HD) 204 described below. The HD 204 stores a terminal program for causing the terminal 10 to implement various types of functions (or causing the terminal 10 to function as various types of units). The program providing system 90 can transmit the terminal program to the terminal 10. Further, the HD 204 of the program providing system 90 also stores a relay device program for causing the relay device 30 to implement various types of functions (or causing the relay device 30 to function as various types of units). The program providing system 90 can transmit the relay device program to the relay device 30. Further, the HD 204 of the program providing system 90 also stores a transmission management program for causing the management system 50 to implement various types of functions (or causing the management system 50 to function as various types of units). The program providing system 90 can transmit the transmission management program to the management system 50.

The maintenance system 100 includes a computer for supporting, managing, or maintaining at least one of the terminal 10, the relay device 30, the management system 50, and the program providing system 90. For example, it is assumed that the maintenance system 100 is located within the country and the terminal 10, the relay device 30, the management system 50, or the program providing system 90 is located outside the country. In this case, the maintenance system 100 remotely performs maintenance such as support, management, or the like on at least one of the terminal 10, the relay device 30, the management system 50, and the program providing system 90 via a communication network 2. Further, the maintenance system 100 performs maintenance such as management of a model number, a serial number, a customer's address, maintenance and inspection, or failure history on at least one of the terminal 10, the relay device 30, the management system 50, and the program providing system 90 without the communication network 2.

The terminals 10aa, 10ab, 10ac,..., the relay device 30a, and the router 70a are communicatively connected via a LAN 2a. The terminals 10ba, 10bb, 10bc,..., the relay device 30b, and the router 70b are communicatively connected via a LAN 2b. The LAN 2a and the LAN 2b are communicatively connected via a dedicated line 2ab in which the router 70ab is included. The LAN 2a and the LAN 2b are constructed within a predetermined region A. For example, the region A is Japan and the LAN 2a is constructed within an office in Tokyo and the LAN 2b is constructed within an office in Osaka.

Terminals 10ca, 10cb, 10cc,..., the relay device 30c, and the router 70c are communicatively connected via a LAN 2c. Terminals 10da, 10db, 10dc,..., the relay device 30d, and the router 70d are communicatively connected via a LAN 2d. The LAN 2c and the LAN 2d are communicatively connected via a dedicated line 2cd in which the router 70cd is included. The LAN 2c and the LAN 2d are constructed within a predetermined region B. For example, the region B is the United States of America and the LAN 2c is constructed within an office in New York and the LAN 2d is constructed within an office in Washington D.C. The region A and the region B are communicatively connected by the routers 70ab and 70cd, respectively, via the Internet 2i.

The management system 50 and the program providing system 90 are communicatively connected to the terminal 10 and the relay device 30 via the Internet 2i. The management system 50 and the program providing system 90 may be disposed in the region A, the region B, or another region.

In the embodiment, the LAN 2a, the LAN 2b, the dedicated line 2ab, the Internet 2i, the dedicated line 2cd, the LAN 2c, and the LAN 2d constitute the communication network 2. The communication network 2 may have a part where wireless communication such as Wireless Fidelity (WiFi) or Bluetooth (registered trademark) is performed in addition to wired communication. Further, in FIG. 1, a set of four numbers shown beneath each terminal 10, each relay device 30, the management system 50, each router 70, and the program providing system 90 indicates an IP address in general IPv4 in a simplified manner. For example, the IP address of the terminal 10aa is "1.2.1.3." While IPv6 may be used instead of IPv4, IPv4 is used in order to simplify descriptions.

Each terminal 10 may be used not only for a call between offices or a call between different rooms in the same office but also for a call in the same room or a call between an outdoor place and an indoor place or between outdoor places. If the terminal 10 is used outdoors, wireless communication as in a mobile phone communication network is performed.

### «Hardware configuration in embodiment»

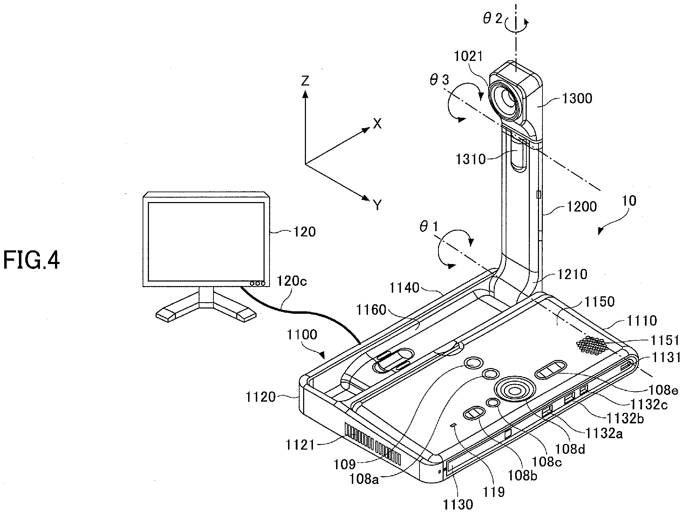

In the following, a hardware configuration of the terminal 10 (hereafter also referred to as a "call terminal 10") in the embodiment is described. FIG. 4 is a perspective view of the call terminal 10 according to the embodiment. As illustrated in FIG. 4, the call terminal 10 includes a case 1100, an arm 1200, and a camera housing 1300. The case 1100 has a front wall surface 1110 where an air intake surface (not shown) formed with a plurality of air intake holes is disposed. The case 1100 also has a rear wall surface 1120 where an air outlet surface 1121 formed with a plurality of air outlet holes is disposed. In accordance with this, by driving a cooling fan built in the case 1100, it is possible to take in external air behind the call terminal 10 via the air intake surface to an inner side of the case 1100 and discharge air within the case 1100 in back of the call terminal 10 via the air outlet surface 1121. The case 1100 has a right wall surface 1130 where a sound collection hole 1131 is formed and a built-in microphone 114 to be described later is capable of collecting sound, other sound, and noise via the sound collection hole 1131.

An operation panel 1150 is formed on a right wall surface 1130 side of the case 1100. On the operation panel 1150, a plurality of operation buttons 108a-108e to be described later, a power supply switch 109 to be described later, and an alarm lamp 119 to be described later are disposed. Further, on the operation panel 1150, a sound output surface 1151 formed with a plurality of sound output holes for issuing output sound from a built-in loudspeaker 115 to be described later is formed. On a left wall surface 1140 side of the case 1100, a housing section 1160 for housing the arm 1200 and the camera housing 1300 is formed as a concave portion. On the right wall surface 1130 of the case 1100, a plurality of connection ports (1132a-1132c) for electrically connecting a cable to an external device connection I/F 118 to be described later are formed. On a left wall surface 1140 of the case 1100, a connection port (not shown) for electrically connecting a cable 120c for the display 120 to the external device connection I/F 118 to be described later is formed.

In the following description, a given one of the operation buttons 108a-108e is described as an "operation button 108" and a given one of the connection ports 1132a-1132c is described as a "connection port 1132."

The arm 1200 is installed on the case 1100 via a torque hinge 1210. The arm 1200 is configured to rotate in upper and lower directions within a range of 135 degrees as a tilt angle θ1 relative to the case 1100. FIG. 4 depicts a state where the tilt angle θ1 is 90 degrees. The camera housing 1300 has a built-in camera 112 to be described later. The camera 112 can take pictures of a user, a document, a room, and the like. On the camera housing 1300, a torque hinge 1310 is formed. The camera housing 1300 is installed on the arm 1200 via the torque hinge 1310. The camera housing 1300 is installed on the arm 1200 via the torque hinge 1310. The camera housing 1300 is configured to rotate in right and left directions within a range of ±180 degrees as a pan angle θ2 and in upper and lower directions within a range of ±45 degrees as a tilt angle θ3 relative to the arm 1200 based on a state depicted in FIG. 4 as zero degrees.

The external view of the call terminal 10 illustrated in FIG. 4 is an example and an appearance of the call terminal 10 is not limited to this. The call terminal 10 may be a personal computer (PC), a smartphone, or a tablet terminal that is generally used. The camera and the microphone may not be built in but may be externally attached. Further, an appearance of the management system 50 is the same as an appearance of a general-purpose server computer, so that a description thereof is omitted.

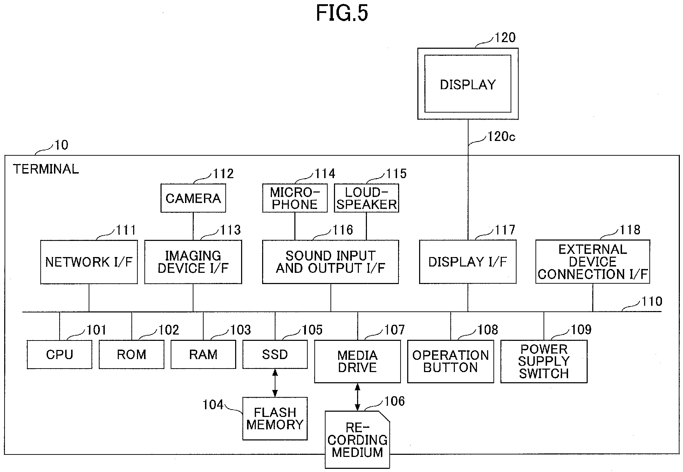

FIG. 5 is a hardware configuration diagram of the terminal 10 according to the embodiment of the present invention. As illustrated in FIG. 5, the terminal 10 according to the embodiment includes a Central Processing Unit (CPU) 101, a Read Only Memory (ROM) 102, a Random Access Memory (RAM) 103, a flash memory 104, a Solid State Drive (SSD) 105, a media drive 107, the operation button 108, the power supply switch 109, and a network interface (I/F) 111. The CPU 101 controls all of operations of the terminal 10. The ROM 102 stores a program such as an Initial Program Loader (IPL) used to drive the CPU 101. The RAM 103 is used as a work area of the CPU 101. The flash memory 104 stores various types of data such as a terminal program, image data, and sound data. The SSD 105 controls reading or writing of various types of data from or into the flash memory 104 in accordance with control of the CPU 101. The media drive 107 controls reading or writing (storing) of data from or into a recording medium 106 such as a flash memory. The operation button 108 is operated to select a destination of the terminal 10, for example. The power supply switch 109 is operated to power ON/OFF the terminal 10. The network I/F 111 is an interface for transmitting data using the communication network 2.

The terminal 10 further includes the camera 112, an imaging device I/F 113, the microphone 114, a loudspeaker 115, a sound input and output I/F 116, a display I/F 117, the external device connection I/F 118, and a bus line 110. The camera 112 is a built-in camera that captures an image of a photographic subject to obtain image data in accordance with control of the CPU 101. The imaging device I/F 113 controls driving of the camera 112. The microphone 114 is a built-in microphone that inputs sound. The loudspeaker 115 is a built-in loudspeaker that outputs sound. The sound input and output I/F 116 processes input and output of sound signals between the microphone 114 and the loudspeaker 115 in accordance with control of the CPU 101. The display I/F 117 transmits image data to an external display 120 in accordance with control of the CPU 101. The external device connection I/F 118 is an interface for connecting various types of external devices. The bus line 110 is a bus line such as an address bus or a data bus for electrically connecting the above constituent elements as illustrated in FIG. 5.

The display 120 includes a display unit made of liquid crystal or organic EL for displaying images of a photographic subject, icons for operation, or the like. The display 120 is connected to the display I/F 117 via the cable 120c. The cable 120c may be a cable for analog RGB (VGA) signals or a cable for component video signals. Further, the cable 120c may be a cable for High-Definition Multimedia Interface (HDMI) (registered trademark) signals or a cable for Digital Video Interactive (DVI) signals.

The camera 112 includes a lens and a solid-state image sensing device for converting light into an electric charge to digitalize images (pictures) of the photographic subject. The camera 112 employs, as the solid-state image sensing device, a Complementary Metal Oxide Semiconductor (CMOS), a Charge Coupled Device (CCD), or the like.

An external device such as an external camera, an external microphone, or an external loudspeaker may be connected to the external device connection I/F 118 via a Universal Serial Bus (USB) cable, for example. If the external camera is connected, the external camera is driven preferentially over the built-in camera 112 in accordance with control of the CPU 101. In the same manner, if the external microphone or the external loudspeaker is connected, the external microphone or the external loudspeaker is driven preferentially over the built-in microphone 114 or the built-in loudspeaker 115 in accordance with control of the CPU 101.

The recording medium 106 is removably attachable to the terminal 10. The recording medium 106 is not limited to the flash memory 104 but an Electrically Erasable and Programmable ROM (EEPROM) or the like may be used as long as the recording medium 106 is a non-volatile memory in which data is written or read in accordance with control of the CPU 101.

The terminal program may be recorded in a computer-readable recording medium such as the recording medium 106 with a file of an installable format or an executable format. Alternatively, the terminal program may be stored in the ROM 102 instead of the flash memory 104.

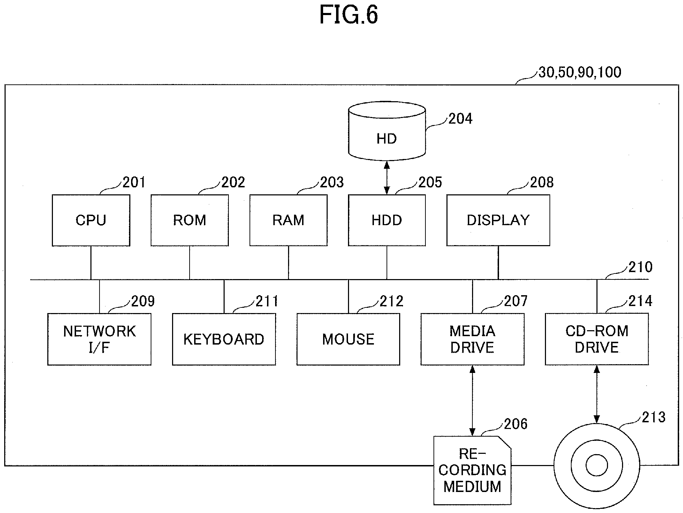

FIG. 6 is a block diagram of hardware of a management system according to the embodiment. The management system 50 includes a CPU 201, a ROM 202, a RAM 203, a HD 204, a Hard Disk Drive (HDD) 205, a media drive 207, a display 208, a network I/F 209, a keyboard 211, a mouse 212, a CD-ROM drive 214, and a bus line 210 that connects these constituent elements. The CPU 201 controls all of operations of the management system 50. The ROM 202 stores a program such as an IPL used to drive the CPU 201. The RAM 203 stores various types of data such as a transmission management program to be used as a work area of the CPU 201. The Hard Disk Drive (HDD) 205 controls reading or writing of various types of data from or into the HD 204 in accordance with control of the CPU 201. The media drive 207 controls reading or writing (storing) of data from or into a recording medium 206 such as a flash memory. The display 208 displays various types of information such as a cursor, a menu, a window, characters, and an image. The network I/F 209 is an interface for transmitting data using the communication network 2. The keyboard 211 has a plurality of keys to input characters, numerical values, and various types of instructions. The mouse 212 is used to select and execute various types of instructions, select an object to be processed, or move the cursor. The CD-ROM drive 214 controls reading or writing of various types of data from or into a Compact Disc Read Only Memory (CD-ROM) 213 as an example of a removable recording medium. The bus line 210 is a bus line such as an address bus or a data bus for electrically connecting the above constituent elements as illustrated in FIG. 6.

The above transmission management program may be recorded in a computer-readable recording medium such as the recording medium 206 or the CD-ROM 213 with a file of an installable format or an executable format. Further, the transmission management program may be stored in the ROM 202 instead of the HD 204.

Because the relay device 30 has the same hardware configuration as in the above management system 50, a description thereof is omitted. However, the HD 204 stores a relay device program for controlling the relay device 30. In this case, the relay device program may be recorded in a computer-readable recording medium such as the recording medium 206 or the CD-ROM 213 with a file of an installable format or an executable format. Further, the relay device program may be stored in the ROM 202 instead of the HD 204.

Because the program providing system 90 and the maintenance system 100 have the same hardware configuration as in the above management system 50, descriptions thereof are omitted. However, the HD 204 stores a program providing program for controlling the program providing system 90. In this case, the program providing program may be recorded in a computer-readable recording medium such as the recording medium 206 or the CD-ROM 213 with a file of an installable format or an executable format. Further, the program providing program may be stored in the ROM 202 instead of the HD 204.

Other examples of a removable recording medium include computer-readable recording media such as a Compact Disc Recordable (CD-R), a Digital Versatile Disk (DVD), and a Blu-ray Disc.

### <<Functional configuration in embodiment>>

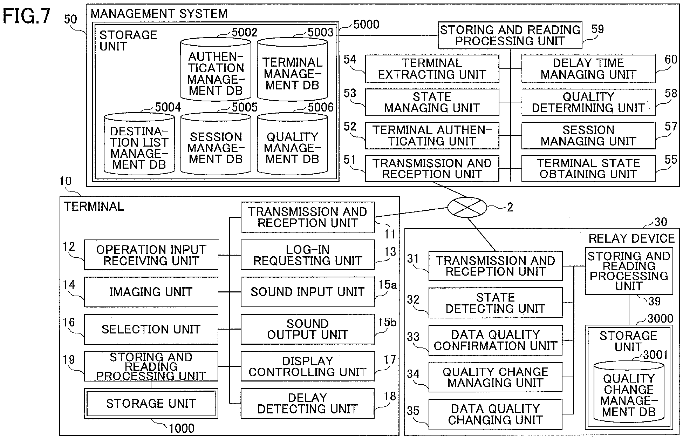

In the following, a functional configuration in the embodiment is described. FIG. 7 is a functional block diagram of each terminal, a device, and a system constituting the transmission system 1 according to the embodiment. In FIG. 7, the terminal 10, the relay device 30, and the management system 50 are connected to be able to perform data communication via the communication network 2. Further, because the program providing system 90 illustrated in FIG. 1 is not directly related to communication in a video conference, the program providing system 90 is omitted from FIG. 7.

### <Functional configuration of terminal>

The terminal 10 includes a transmission and reception unit 11, an operation input receiving unit 12, a log-in requesting unit 13, an imaging unit 14, a sound input unit 15a, a sound output unit 15b, a selection unit 16, a display controlling unit 17, a delay detecting unit 18, and a storing and reading processing unit 19. These units are functions or units implemented when any one of the constituent elements illustrated in FIG. 5 operates in response to an instruction from the CPU 101 compliant with the terminal program loaded in the RAM 103 from the flash memory 104. The terminal 10 also includes a storage unit 1000 configured with the RAM 103 illustrated in FIG. 5 and the flash memory 104 illustrated in FIG. 5.

### (Configuration of each function of terminal)

With reference to FIG. 5 and FIG. 7, a configuration of each function of the terminal 10 is described in detail. In the following, among constituent elements illustrated in FIG. 5, a relationship with main constituent elements to implement the configuration of each function of the terminal 10 is also described.

The transmission and reception unit 11 of the terminal 10 illustrated in FIG. 7 is implemented by an instruction from the CPU 101 illustrated in FIG. 5 and the network I/F 111 illustrated in FIG. 5. The transmission and reception unit 11 transmits and receives various types of data (information) to or from another terminal, a device, or a system via the communication network 2. The transmission and reception unit 11 starts receiving state information that indicates a state of each terminal as a destination candidate from the management system 50 before starting a call to a desired destination terminal. This state information indicates not only an operation state (online or offline state) of each terminal 10 but also a detailed state indicating whether a call is possible online, whether the call is being performed, whether a user is away from a seat, and the like. The state information indicates not only the operation state of each terminal 10 but also various states indicating that the cable 120c is disconnected from the terminal 10, sound is output while an image is not output, sound is not output (mute), and the like in the terminal 10. The following describes a case where the state information indicates the operation state as an example.

The operation input receiving unit 12 is implemented by an instruction from the CPU 101 illustrated in FIG. 5, the operation button 108, and the power supply switch 109 illustrated in FIG. 5. The operation input receiving unit 12 receives various types of inputs performed by a user. For example, if the user switches ON the power supply switch 109 illustrated in FIG. 5, the operation input receiving unit 12 illustrated in FIG. 7 receives a power-on to switch the terminal 10 ON.

The log-in requesting unit 13 is implemented by an instruction from the CPU 101 illustrated in FIG. 5. The log-in requesting unit 13 automatically transmits, upon reception of the power-on, log-in request information indicating a log-in request and an IP address of a requestor terminal at this moment from the transmission and reception unit 11 to the management system 50 via the communication network 2. If the user switches the power supply switch 109 from ON to OFF, after the transmission and reception unit 11 transmits state information about powering OFF to the management system 50, the operation input receiving unit 12 completely powers the terminal 10 OFF. In accordance with this, the management system 50 is able to determine that the terminal 10 is powered OFF.

The imaging unit 14 is implemented by an instruction from the CPU 101 illustrated in FIG. 5, the camera 112, and the imaging device I/F 113 illustrated in FIG. 5. The imaging unit 14 captures an image of a photographic subject and outputs image data obtained by the capturing.

The sound input unit 15a is implemented by an instruction from the CPU 101 illustrated in FIG. 5 and the sound input and output I/F 116 illustrated in FIG. 5. After sound of the user is converted into a sound signal by the microphone 140, the sound input unit 15a inputs sound data related to the sound signal. The sound output unit 15b is implemented by an instruction from the CPU 101 illustrated in FIG. 5 and the sound input and output I/F 116 illustrated in FIG. 5. The sound output unit 15b outputs a sound signal related to sound data to a loudspeaker and causes the loudspeaker 150 to output sound.

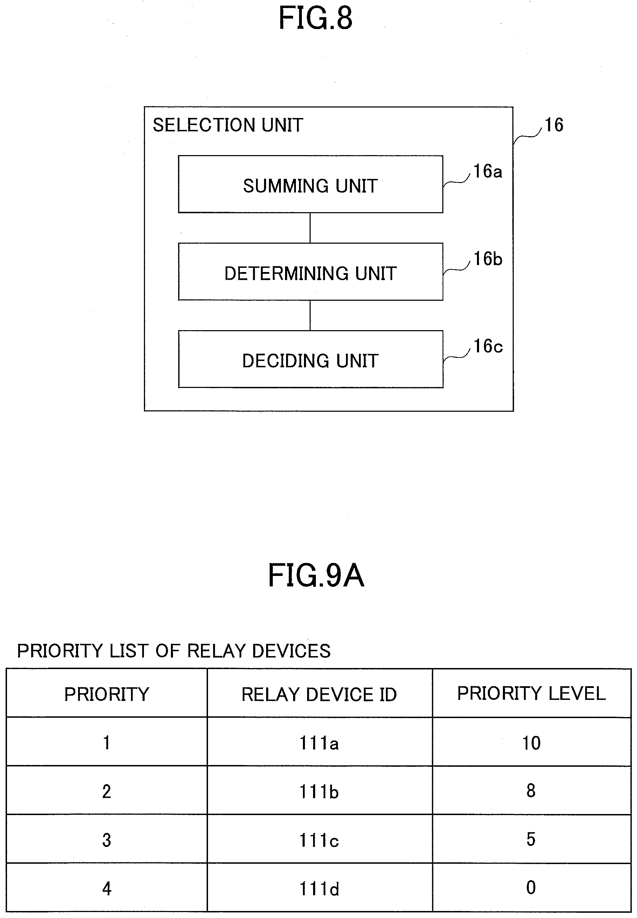

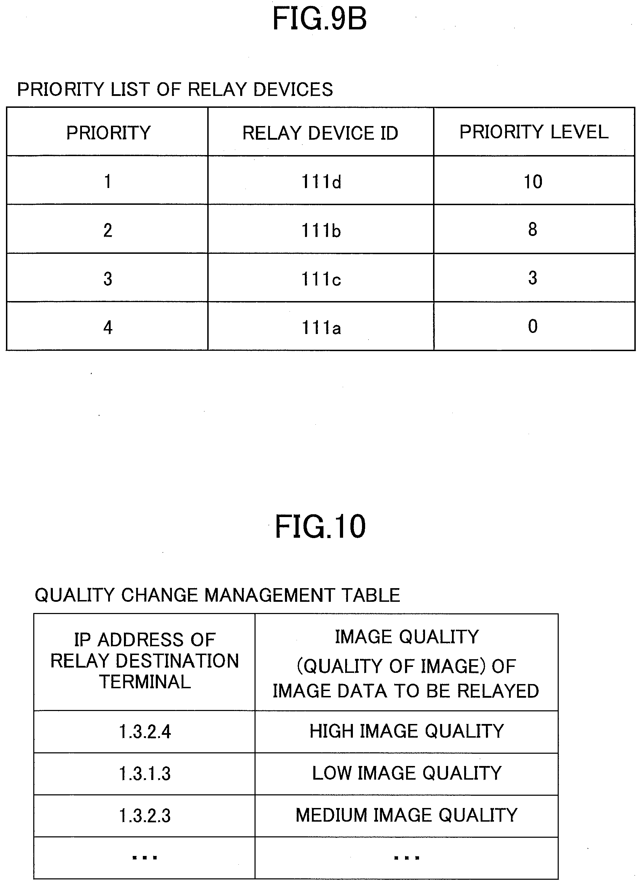

The selection unit 16 selects a specific relay device that relays content data based on a priority list (an example of first priority level information) on its own terminal side and a priority list (an example of second priority level information) on another transmission terminal side. In order to do so, the selection unit 16 implements, using an instruction from the CPU 101 illustrated in FIG. 5, a summing unit 16a, a determining unit 16b, and a setting unit 16c as illustrated in FIG. 8. FIGs. 9A and 9B are diagrams illustrating the priority lists of relay devices. As illustrated in FIGs. 9A and 9B, in the priority list, a relay device ID and a priority level are associated in each priority. The priority level (priority) is set by a user of each transmission terminal 10 or an administrator of the management system 50. For example, priority of the relay device 30a indicated by a relay device ID "111a" is the highest in the list of FIG. 9A but is the lowest in the list of FIG. 9B. By contrast, priority of the relay device 30b indicated by a relay device ID "111b" has a good balance because the priority is the second highest in the list of FIG. 9A and is also the second highest in the list of FIG. 9B.

Returning to FIG. 8, the summing unit 16a sums up, for each relay device ID, a priority level in the priority list on its own terminal side and a priority level in the priority list on the other transmission terminal side and derives a total priority level. The determining unit 16b determines whether there is one total priority level having the highest value among total priority levels.

The deciding unit 16c decides, from a plurality of relay device IDs, a relay device ID related to the total priority level having the highest value among the total priority levels. If there are a plurality of total priority levels having the highest value, the deciding unit 16c decides, at random (arbitrarily), a relay device ID related to the total priority level among the total priority levels having the highest value.

Returning to FIG. 7, the display controlling unit 17 is implemented by an instruction from the CPU 101 illustrated in FIG. 5 and the display I/F 117 illustrated in FIG. 5. The display controlling unit 17, as will be described later, performs control to combine received image data having different resolutions and to transmit the combined image data to the display 120. The display controlling unit 17 can transmit destination list information received from the management system 50 to the display 120 and cause the display 120 to display a destination list.

The delay detecting unit 18 is implemented by an instruction from the CPU 101 illustrated in FIG. 5. The delay detecting unit 18 detects a delay time (ms) of image data or sound data sent from another terminal 10 via the relay device 30.

The storing and reading processing unit 19 is implemented by an instruction from the CPU 101 illustrated in FIG. 5 and the SSD 105 illustrated in FIG. 5 or implemented by an instruction from the CPU 101. The storing and reading processing unit 19 performs a process to store various types of data in the storage unit 1000 and read out various types of data stored in the storage unit 1000. In the storage unit 1000, a terminal Identification (ID) to identify the terminal 10, a password, and the like are stored. Further, in the storage unit 1000, image data and sound data received upon communication with a destination terminal are overwritten and stored in each reception. Based on the image data before being overwritten, an image is displayed on the display 120 and based on the sound data before being overwritten, sound is output from the loudspeaker 150. In the storage unit 1000, a priority list in its own terminal is stored.

A terminal ID and a relay device ID described later according to the embodiment indicate identification information such as a language, characters, symbols, or various types of signs used to uniquely identify the terminal 10 and the relay device 30. The terminal ID and the relay device ID may be identification information created by combining at least two of the language, the characters, the symbols, and the various types of signs.

### <Functional configuration of relay device>

The relay device 30 includes a transmission and reception unit 31, a state detecting unit 32, a data quality confirmation unit 33, a quality change managing unit 34, a data quality changing unit 35, and a storing and reading processing unit 39. These units are functions or units implemented when any one of the constituent elements illustrated in FIG. 6 operates in response to an instruction from the CPU 201 compliant with the relay device program loaded in the RAM 203 from the HD 204. The relay device 30 includes a storage unit 3000 configured with the RAM 203 illustrated in FIG. 6 and/or the HD 204 illustrated in FIG. 6.

### (Quality change management table)

The storage unit 3000 includes a quality change management Data Base (DB) 3001 configured with a quality change management table as illustrated in FIG. 10. In the quality change management table, an IP address of a terminal 30 as a relay destination (destination) of image data and image quality of the image data relayed to the relay destination by the relay device 30 are associated and managed.

### (Configuration of each function of relay device)

A configuration of each function of the relay device 30 is described in detail. In the following, among constituent elements illustrated in FIG. 6, a relationship with main constituent elements to implement the configuration of each function of the relay device 30 is also described.

The transmission and reception unit 31 of the relay device 30 illustrated in FIG. 7 is implemented by an instruction from the CPU 201 illustrated in FIG. 6 and the network I/F 209 illustrated in FIG. 6. The transmission and reception unit 31 transmits and receives various types of data (information) to or from another terminal, a device, or a system via the communication network 2.

The state detecting unit 32 is implemented by an instruction from the CPU 201 illustrated in FIG. 6. The state detecting unit 32 detects an operation state of the relay device 30 including the state detecting unit 32. Operation states include "Online," "Offline," "calling," and "temporarily suspended."

The data quality confirmation unit 33 is implemented by an instruction from the CPU 201 illustrated in FIG. 6. The data quality confirmation unit 33 searches the quality change management DB 3001 (see FIG. 10) while using, as a search key, an IP address of a destination terminal and extracts corresponding image quality of image data to be relayed, so that the data quality confirmation unit 33 confirms the image quality of the image data to be relayed.

The quality change managing unit 34 is implemented by an instruction from the CPU 201 illustrated in FIG. 6. The quality change managing unit 34 changes contents of the quality change management DB 3001 based on quality information described later, the quality information being sent from the management system 50. For example, it is assumed that a requestor terminal (terminal 10aa) having a terminal ID "01aa" and a destination terminal (terminal 10db) having a terminal ID "01db" are holding a video conference by transmitting and receiving image data having high image quality. During this video conference, if a requestor terminal (terminal 10bb) and a destination terminal (terminal 10ca) for holding another video conference start the video conference via the communication network 2, reception of the image data may be delayed in the destination terminal (terminal 10db). In such a case, the relay device 30 lowers the image quality of the image data that has been relayed from the high image quality to medium image quality. Then, based on quality information to indicate the medium image quality, contents of the quality change management DB 3001 are changed such that the relay device 30 lowers the image quality of image data to relay from the high image quality to the medium image quality.

The data quality changing unit 35 is implemented by an instruction from the CPU 201 illustrated in FIG. 6. The data quality changing unit 35 changes, based on the contents of the quality change management DB 3001 changed above, image quality of image data sent from a transmitter terminal 10.

The storing and reading processing unit 39 is implemented by an instruction from the CPU 201 illustrated in FIG. 6 and the HDD 205 illustrated in FIG. 6. The storing and reading processing unit 39 performs a process to store various types of data in the storage unit 3000 and read out various types of data stored in the storage unit 3000.

### <Functional configuration of management system>

The management system 50 includes a transmission and reception unit 51, a terminal authenticating unit 52, a terminal extracting unit 54, a terminal state obtaining unit 55, a session managing unit 57, a quality determining unit 58, a storing and reading processing unit 59, and a delay time managing unit 60. These units are functions or units implemented when any one of the constituent elements illustrated in FIG. 6 operates in response to an instruction from the CPU 201 compliant with a management system program loaded in the RAM 203 from the HD 204. The management system 50 includes a storage unit 5000 configured with the HD 204 illustrated in FIG. 6.

### (Authentication management table)

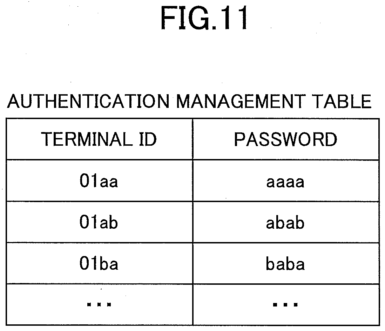

Further, the storage unit 5000 includes an authentication management DB 5002 configured with an authentication management table as illustrated in FIG. 11. In the authentication management table, for each terminal ID of all of terminals 10 managed by the management system 50, a password is managed in association with the terminal ID. For example, in the authentication management table illustrated in FIG. 11, a terminal ID of the terminal 10aa is "01aa" and a corresponding password is "aaaa."

### (Terminal management table)

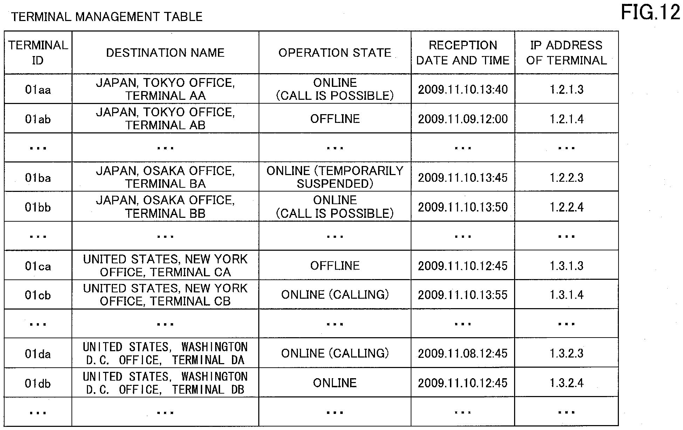

The storage unit 5000 includes a terminal management DB 5003 configured with a terminal management table as illustrated in FIG. 12. In the terminal management table, for the terminal ID of each terminal 10, a destination name in a case where the terminal 10 is a destination, an operation state of the terminal 10, a reception date and time when log-in request information described later is received by the management system 50, and an IP address of the terminal 10 are associated and managed. For example, in the terminal management table illustrated in FIG. 12, for the terminal 10aa having the terminal ID "01aa," the terminal name is "Japan, Tokyo office, terminal AA," the operation state is "Online (call is possible)," the date and time when the log-in request information is received by the management system 50 is "13:40 on November 10, 2009," and the IP address of the terminal 10aa is "1.2.1.3."

### (Destination list management table)

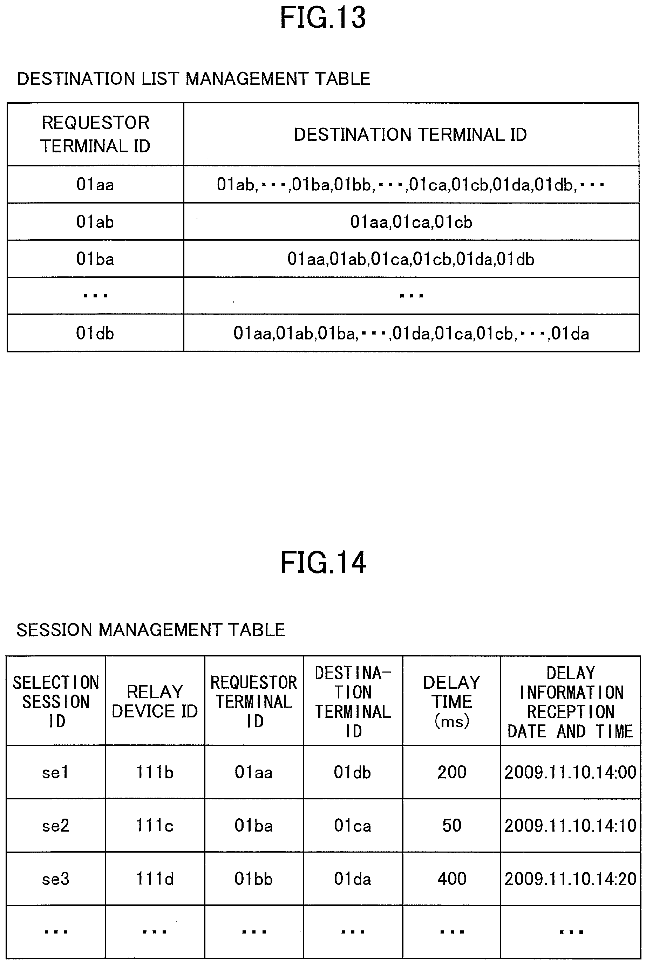

The storage unit 5000 includes a destination list management DB 5004 configured with a destination list management table as illustrated in FIG. 13. In the destination list management table, for the terminal ID of a requestor terminal that sends a request to start a call in a video conference, all of terminal IDs of destination terminals registered as candidates for a destination terminal are associated and managed. For example, the destination list management table illustrated in FIG. 13 indicates that candidates for a destination terminal (terminal 10db) to which the requestor terminal (terminal 10aa) having the terminal ID "01aa" can send a request to start a call in a video conference are the terminal 10ab having the terminal ID "01ab," the terminal 10ba having the terminal ID "01ba," the terminal 10bb having the terminal ID "01bb," and the like. The candidates for a destination terminal are added or deleted for updating in response to a request for addition or deletion sent from a given requestor terminal to the management system 50.

### (Session management table)

The storage unit 5000 includes a session management DB 5005 configured with a session management table as illustrated in FIG. 14. In the session management table, for each selection session ID used to perform a session to select the relay device 30, a relay device ID of the relay device 30 used to relay image data and sound data, a terminal ID of a requestor terminal, a terminal ID of a destination terminal, a delay time (ms) of reception when image data is received by the destination terminal, and reception date and time when delay information indicating the delay time is sent from the destination terminal and received by the management system 50 are associated and managed. For example, the session management table illustrated in FIG. 14 indicates that the relay device 30b (relay device ID "111b") selected during a session performed using the selection session ID "se1" relays image data and sound data between the requestor terminal (terminal 10aa) having the terminal ID "01aa" and the destination terminal (terminal 10db) having the terminal ID "01db" and a delay time of image data in the destination terminal (terminal 10db) at "14:00 on November 10, 2009" is 200 (ms). If a video conference is held between two terminals 10, the reception date and time of delay information may be managed based on delay information transmitted from the requestor terminal instead of the above destination terminal. However, in a case where a video conference is held among three or more terminals 10, the reception date and time of delay information is managed based on delay information transmitted from the terminal 10 that receives image data and sound data.

### (Quality management table)

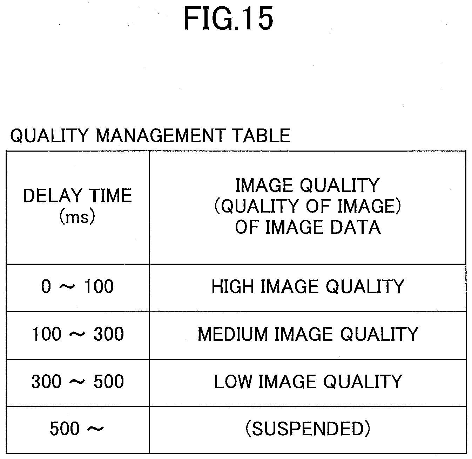

The storage unit 5000 includes a quality management DB 5007 configured with a quality management table as illustrated in FIG. 15. In the quality management table, a delay time of image data and image quality (quality of image) of image data are associated and managed such that as the delay time (ms) of image data in the requestor terminal or the destination terminal becomes longer, the image quality of image data to be relayed by the relay device 30 is lowered.

### (Configuration of each function of management system)

A configuration of each function of the management system 50 is described in detail. In the following, among constituent elements illustrated in FIG. 6, a relationship with main constituent elements to implement the configuration of each function of the management system 50 is also described.

The transmission and reception unit 51 is implemented by an instruction from the CPU 201 illustrated in FIG. 6 and the network I/F 209 illustrated in FIG. 6. The transmission and reception unit 51 transmits and receives various types of data (information) to or from another terminal, a device, or a system via the communication network 2.

The terminal authenticating unit 52 is implemented by an instruction from the CPU 102 illustrated in FIG. 6. The terminal authenticating unit 52 searches the authentication management DB 5002 of the storage unit 5000 while using a terminal ID and a password as a search key, the terminal ID and the password being included in log-in request information received via the transmission and reception unit 51. The terminal authenticating unit 52 performs terminal authentication by determining whether the same terminal ID and the password are managed in the authentication management DB 5002.

A state managing unit 53 is implemented by an instruction from the CPU 102 illustrated in FIG. 6. In the terminal management DB 5003 (see FIG. 12), in order to manage an operation state of a requestor terminal that sends a log-in request, the state managing unit 53 associates, stores, and manages the terminal ID of the requestor terminal, the operation state of the requestor terminal, the reception date and time when log-in request information is received by the management system 50, and the IP address of the requestor terminal. If the user switches the power supply switch 109 of the terminal 10 from ON to OFF, the state managing unit 53 changes the operation state indicating Online in the terminal management DB 5003 (see FIG. 12) to Offline based on state information about powering OFF transmitted from the terminal 10.

The terminal extracting unit 54 is implemented by an instruction from the CPU 102 illustrated in FIG. 6. The terminal extracting unit 54 searches the destination list management DB 5004 (see FIG. 13) while using, as a key, the terminal ID of the requestor terminal that sends the log-in request and extracts terminal IDs by reading out terminal IDs of candidates for a destination terminal that can have a call from the requestor terminal. The terminal extracting unit 54 also searches the destination list management DB 5004 (FIG. 13) while using, as a key, the terminal ID of the requestor terminal that sends the log-in request and extracts terminal IDs of other requestor terminals that register the terminal ID of the above requestor terminal as a candidate for a destination terminal.

The terminal state obtaining unit 55 is implemented by an instruction from the CPU 102 illustrated in FIG. 6. The terminal state obtaining unit 55 searches the terminal management DB 5003 (see FIG. 12) while using, as a search key, the terminal ID of the candidate for the destination terminal extracted by the terminal extracting unit 54 and reads out the operation state for each terminal ID extracted by the terminal extracting unit 54. In accordance with this, the terminal state obtaining unit 55 can obtain the operation states of the candidates for the destination terminal that can have a call from the requestor terminal that sends the log-in request. Further, the terminal state obtaining unit 55 also searches the terminal management DB 5003 while using, as a search key, the terminal ID extracted by the terminal extracting unit 54 and obtains the operation state of the requestor terminal that sends the log-in request.

The session managing unit 57 is implemented by an instruction from the CPU 102 illustrated in FIG. 6. In the session management DB 5005 (see FIG. 14) of the storage unit 5000, the session managing unit 57 associates, stores, and manages a selection session ID created by a selection session ID creating unit, the terminal ID of the requestor terminal, and the terminal ID of the destination terminal. In the session management DB 5005 (see FIG. 14), the session managing unit 57 stores and manages the relay device ID of the relay device 30 eventually singled out by the setting unit 16c of the terminal 10 for each selection session ID.

The quality determining unit 58 searches the quality management DB 5007 (see FIG. 15) while using, as a search key, the above delay time and extracts corresponding image quality of image data, so that the quality determining unit 58 determines image quality of image data to be relayed by the relay device 30.

The storing and reading processing unit 59 is implemented by an instruction from the CPU 102 illustrated in FIG. 6 and the HDD 205 illustrated in FIG. 6. The storing and reading processing unit 59 performs a process to store various types of data in the storage unit 5000 and read out various types of data stored in the storage unit 5000.

The delay time managing unit 60 is implemented by an instruction from the CPU 102 illustrated in FIG. 6. The delay time managing unit 60 searches the terminal management DB 5003 (see FIG. 12) while using, as a search key, the IP address of the destination terminal in order to extract a corresponding terminal ID. Further, in the session management table of the session management DB 5005 (see FIG. 14), the delay time managing unit 60 stores and manages a delay time indicated by the delay information in a field of delay time in a record where the extracted terminal ID is included.

### «Processing or operation in embodiment»

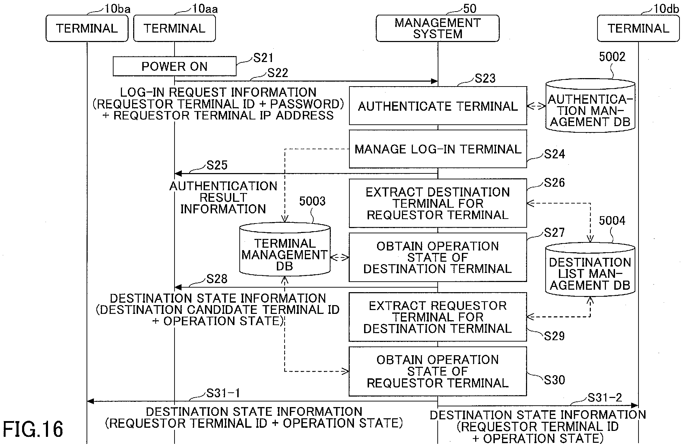

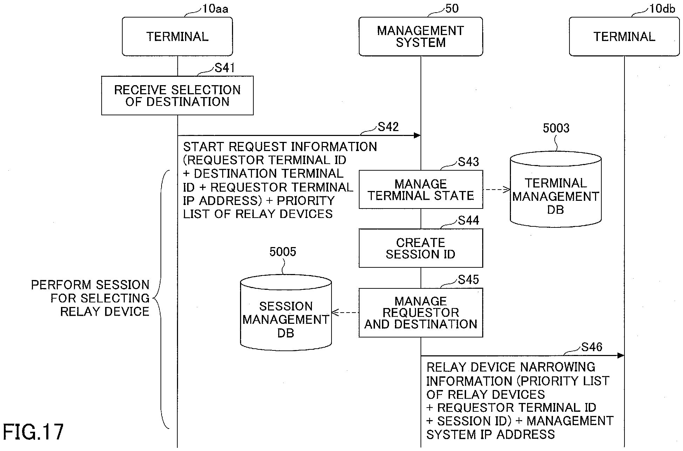

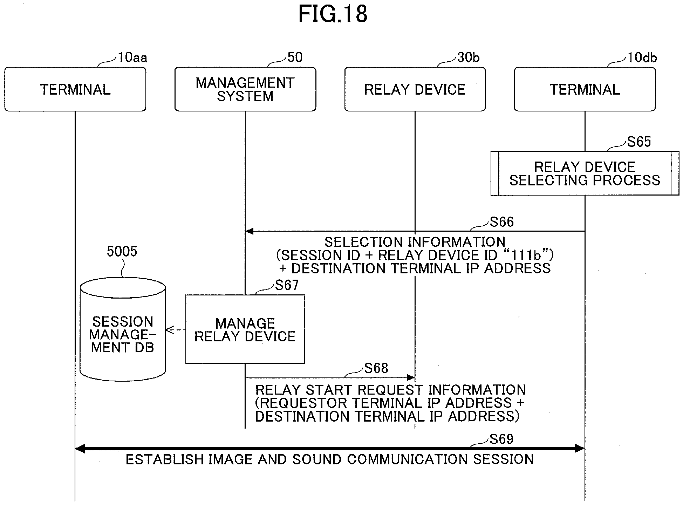

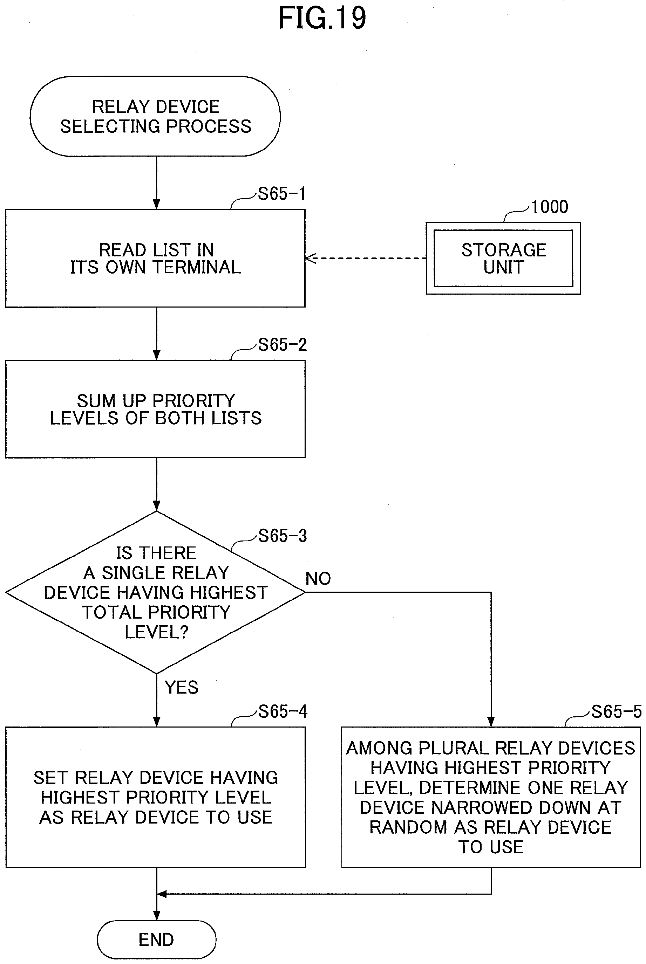

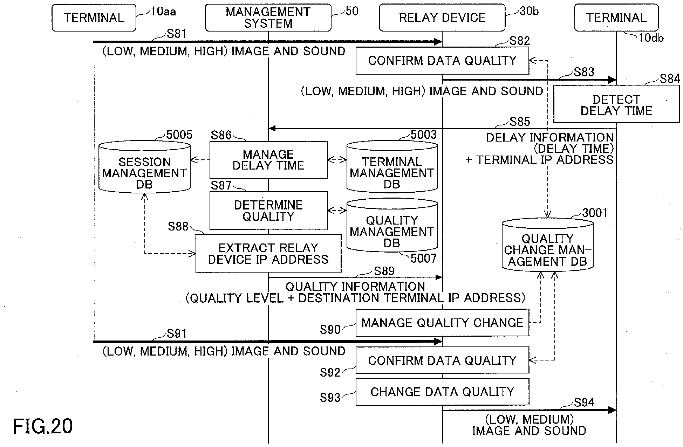

In the following, a processing method in the transmission system 1 according to the embodiment is described with reference to FIGs. 16 to 20. FIG. 16 is a sequence diagram illustrating a process of a preparation stage to start a call among terminals. FIG. 17 is a sequence diagram illustrating a process to narrow down relay devices 30. FIG. 18 is a sequence diagram illustrating a process by which the terminal 10 selects the relay device 30. FIG. 19 is a flowchart of a process by which the terminal selects the relay device 30. FIG. 20 is a sequence diagram of a process to transmit and receive image data and sound data between terminals.

With reference to FIG. 16, a process to transmit and receive various types of management information in the preparation stage before starting a call between the terminal 10aa and the terminal 10db is described. In FIG. 16, various types of management information are transmitted and received using the management information session sei illustrated in FIG. 2.

First, if the user switches ON the power supply switch 109 illustrated in FIG. 5, the operation input receiving unit 12 illustrated in FIG. 7 receives a power-on to switch ON (step S21). The log-in requesting unit 13 automatically transmits, upon reception of the power-on, log-in request information indicating a log-in request from the transmission and reception unit 11 to the management system 50 via the communication network 2 (step S22). In the log-in request information, a terminal ID for identifying the terminal 10aa as its own terminal serving as a requestor and a password are included. The terminal ID and the password are data read out from the storage unit 1000 via the storing and reading processing unit 19 and sent to the transmission and reception unit 11. When the log-in request information is transmitted from the terminal 10aa to the management system 50, the management system 50 on a reception side can determine an IP address of the terminal 10ab on a transmission side.

Next, the terminal authenticating unit 52 of the management system 50 searches the authentication management DB 5002 (see FIG. 11) of the storage unit 5000 while using, as a search key, the terminal ID and the password included in the log-in request information received via the transmission and reception unit 51. The terminal authenticating unit 52 performs terminal authentication by determining whether the same terminal ID and the password are managed in the authentication management DB 5002 (step S23). If the terminal authenticating unit 52 determines that the log-in request is sent from an authorized terminal 10 because the same terminal ID and the password are managed, the state managing unit 53 associates and stores the terminal ID of the terminal 10aa, an operation state, a reception date and time when the above log-in request information is received, and the IP address of the terminal 10aa in the terminal management DB 5003 (see FIG. 12) (step S24). In accordance with this, in the terminal management table illustrated in FIG. 12, the terminal ID "01aa," the operation state "Online," the reception date and time "2009.11.10.13:40," and the IP address of the terminal 10aa "1.2.1.3." are associated and managed.

Next, the transmission and reception unit 51 of the management system 50 transmits, via the communication network 2, authentication result information indicative of an authentication result obtained by the terminal authenticating unit 52 to the requestor terminal (terminal 10aa) that sent the log-in request (step S25). In the embodiment, in a case where the terminal authenticating unit 52 determines an authorized terminal, the following processing is performed.

The terminal extracting unit 54 of the management system 50 searches the destination list management DB 5004 (see FIG. 13) while using, as a search key, the terminal ID "01aa" of the requestor terminal (terminal 10aa) that sent the log-in request and extracts, by reading out, terminal IDs of candidates for a destination terminal that can communicate with the requestor terminal (terminal 10aa) (step S26). In this case, the terminal IDs "01ab," "01ba," and "01db" of destination terminals (terminals 10ab, 10ba, and 10db) for the terminal ID "01aa" of the requestor terminal (terminal 10aa) are extracted.

Next, the terminal state obtaining unit 55 searches the terminal management DB 5003 (see FIG. 12) while using, as a search key, the terminal IDs "01ab," "01ba," and "01db" of candidates for the destination terminal extracted by the terminal extracting unit 54. The terminal state obtaining unit 55 obtains operation states of the terminals 10ab, 10ba, and 10db by reading out the operation states "Offline," "Online," and "Online" for the terminal IDs extracted by the terminal extracting unit 54 (step S27).

Next, the transmission and reception unit 51 transmits destination state information to the requestor terminal (terminal 10aa) via the communication network 2, the destination state information including the terminal IDs "01ab," "01ba," and "01db" used as the search key in step S27 above and the operation states "Offline," "Online," and "Online" of the corresponding destination terminals (terminals 10ab, 10ba, and 10db) (step S28). In accordance with this, the requestor terminal (terminal 10aa) can determine the operation states "Offline," "Online," and "Online" of the terminals (10ab, 10ba, and 10db) at this moment as the candidates for the destination terminal that can communicate with the requestor terminal (terminal 10aa).

Further, the terminal extracting unit 54 of the management system 50 searches the destination list management DB 5004 (see FIG. 13) while using, as a search key, the terminal ID "01aa" of the requestor terminal (terminal 10aa) that sent the log-in request. The terminal extracting unit 54 extracts terminal IDs of other requestor terminals that register the terminal ID "01aa" of the above requestor terminal (terminal 10aa) as a candidate for a destination terminal (step S29). In the destination list managing table illustrated in FIG. 13, the terminal IDs of the other requestor terminals to be extracted are "01ab," "01ba," and "01db."

Next, the terminal state obtaining unit 55 of the management system 50 searches the terminal state management DB 5003 (see FIG. 12) while using, as a search key, the terminal ID "01aa" of the requestor terminal (terminal 10aa) that sent the log-in request. The terminal state obtaining unit 55 obtains an operation state of the requestor terminal (terminal 10aa) that sent the log-in request (step S30).

The transmission and reception unit 51 transmits destination state information to terminals 10ba and 10db having the operation state "Online" in the terminal management DB 5003 (see FIG. 12) among the terminals 10ab, 10ba, and 10db according to the terminal IDs "01ab," "01ba," and "01db" extracted in step S29, the destination state information including the terminal ID "01aa" of the requestor terminal (terminal 10aa) and the operation state "Online" obtained in step S30 (steps S31-1, 2). In addition, when the transmission and reception unit 51 transmits the destination state information to the terminals (10ba and 10db), the transmission and reception unit 51 refers to the IP address of the terminal managed in the terminal management table illustrated in FIG. 12 based on the respective terminal IDs ("01ba" and "01bd"). In accordance with this, it is possible to transmit the terminal ID "01aa" of the requestor terminal (terminal 10aa) that sent the log-in request and the operation state "Online" to each of other destination terminals (terminals 10db and 10ba) that can communicate, as a destination, with the requestor terminal (terminal 10aa) that sent the log-in request.

In another terminal 10, if the user switches ON the power supply switch 109 illustrated in FIG. 6, the operation input receiving unit 12 illustrated in FIG. 7 receives power-on in the same manner as in step S21 above and the same processing as in steps S22 to S31-1, 2 is performed. Accordingly, the description thereof is omitted here.

In the following, a process to narrow down relay devices 30 is described with reference to FIG. 17. In FIG. 17, various types of management information are transmitted and received using the management information session sei illustrated in FIG. 17. In the following, a case where the user of the requestor terminal (terminal 10aa) makes a selection to start a call to the destination terminal (terminal 10db) is described.

If the user presses the operation button 108 illustrated in FIG. 5 to select the terminal 10db, the operation input receiving unit 12 illustrated in FIG. 7 receives a request to start a call to the destination terminal 10db (step S41). Then the transmission and reception unit 11 of the requestor terminal (terminal 10aa) transmits start request information indicating a request to start a call to the management system 50 (step S42). In this start request information, the terminal ID "01aa" of the terminal 10aa, the terminal ID "01db" of the destination terminal (terminal 10db), and a priority list of relay devices (see FIG. 9(A)) are included. In accordance with this, the transmission and reception unit 51 of the management system 50 can receive the above start request information and receive the IP address "1.2.1.3" of the requestor terminal (terminal 10aa) serving as a transmitter.

Then, in the terminal management table of the terminal management DB 5003 (see FIG. 12), the state managing unit 53 changes both fields of operation state in records to "calling," the records including the terminal ID "01aa" and the terminal ID "01db", the change being performed based on the terminal ID "01aa" of the requestor terminal (terminal 10aa) and the terminal ID "01db" of the destination terminal (terminal 10db) that are included in the start request information (step S43). In this state, although the requestor terminal (terminal 10aa) and the destination terminal (terminal 10db) have not started a call, the terminals are in a calling state. Accordingly, if another terminal 10 tries to call the requestor terminal (terminal 10aa) or the destination terminal (terminal 10db), a notification sound or display to indicate what is called the calling state is output. In the following, a process to perform a session to select the relay device 30 is described. The session managing unit 57 illustrated in FIG. 9 creates a selection session ID to be used for performing the session to select the relay device 30 (step S44). In the session management DB 5005 (see FIG. 14) of the storage unit 5000, the session managing unit 57 associates, stores, and manages the selection session ID "se1" created in step S44 above, the terminal ID "01aa" of the requestor terminal (terminal 10aa), and the terminal "01db" of the destination terminal (terminal 10db) (step S45).

Next, the transmission and reception unit 51 illustrated in FIG. 7 transmits relay device selection requesting information to the destination terminal (terminal 10db) via the communication network 2 (step S46). In the relay device selection requesting information, the priority list of relay devices received in step S42 above, the terminal ID "01aa" of the requestor terminal (terminal 10aa), and the selection session ID "se1" are included. In accordance with this, the terminal 10db can receive the relay device selection requesting information and the IP address "1.1.1.2" of the management system 50 serving as a transmitter of the relay device selection requesting information.

In the following, a process by which the destination terminal (terminal 10db) selects the relay device 30 is described with reference to FIG. 18 and FIG. 19. In FIG. 18, various types of management information are transmitted and received using the management information session sei illustrated in FIG. 2.

The selection unit 16 of the destination terminal (terminal 10db) eventually selects one relay device 30 to relay image data and sound data during a call in a video conference, the selection being performed based on the priority list of relay devices on the requestor terminal (terminal 10aa) side received in step S46 and a priority list of relay devices on its own terminal side serving as the destination terminal (terminal 10db) (step S65).

In the following, the process in step S65 is described in more detail with reference to FIG. 7, FIG. 8, FIG. 9, and FIG. 19. The storing and reading processing unit 19 illustrated in FIG. 7 reads out the priority list (see FIG. 9(B)) in its own terminal (terminal 10db) from the storage unit 1000 (step S65-1). Then the summing unit 16a of the selection unit 16 illustrated in FIG. 8 sums up, for each relay device ID, priority levels based on the priority list (see FIG. 9(A)) in the requestor terminal (terminal 10aa) received in step S46 and the priority list (see FIG. 9(B)) in its own terminal (terminal 10db) and derives a total priority level (step S65-2).

Next, the determining unit 16b of the selection unit 16 determines whether there is one relay device ID having the highest total priority level (step S65-3). In the example shown in FIG. 9, the relay device ID "111a" has a total priority level "10," the relay device ID "111b" has a total priority level "16," the relay device ID "111c" has a total priority level "8," and the relay device ID "111d" has a total priority level "10." Accordingly, the determining unit 16b determines that there is only one relay device ID "111b" having the highest priority level.

Next, in step S65-3, if it is determined that there is one relay device ID (YES), the deciding unit 16c decides that the relay device indicated by the relay device ID having the highest priority level is a relay device to be actually used (step S65-4). In the example illustrated in FIG. 9, the relay device 30b indicated by the relay device ID "111b" is decided.

In contrast, in step S65-3, if it is not determined that there is one relay device ID (NO), the deciding unit 16c decides a relay device indicated by a relay device ID as a relay device to be actually used, the relay device ID being narrowed down to one at random (arbitrarily) among a plurality of relay device IDs having the highest priority level (step S65-5).

Next, the destination terminal (terminal 10db) transmits selection information indicating selection of the relay device 30b from the transmission and reception unit 11 to the management system 50 via the communication network 2 (step S66). In the selection information, the session ID "se1" and the relay device ID "111b" of the selected relay device 30b are included. In accordance with this, the management system 50 can interpret that the relay device 30b is selected when the session having the session ID "se1" is performed and can receive the IP address "1.3.2.4" of the destination terminal (terminal 10db) serving as a transmitter of the selection information.

Next, in the session management table of the session management DB 5005 (see FIG. 14), the session managing unit 57 of the management system 50 stores and manages the relay device ID "111a" of the relay device 30b eventually selected as one in a field of the relay device ID in a record where the session ID "se1" is included (step S67). Then the transmission and reception unit 51 of the management system 50 transmits relay start request information indicating a request to start relaying to the relay device 30b via the communication network 2 (step S68). The relay start request information includes the IP addresses ("1.2.1.3" and "1.3.2.4") of the requestor terminal (terminal 10aa) and the destination terminal (terminal 10db) for which the relay is performed. In accordance with this, the relay device 30b can interpret that the relay device 30b which is the own device is selected, so that the relay device 30b establishes a session between the terminals (10aa and 10db) to communicate image data of three types including low resolution, medium resolution, and high resolution and sound data (step S69). Accordingly, the terminals (10aa and 10db) can start a call in a video conference.

In the following, a process to transmit and receive image data and sound data in order to perform a call in a video conference between the requestor terminal and the destination terminal is described with reference to FIG. 7 and FIG. 20. First, using the image and sound data session sed illustrated in FIG. 2, the requestor terminal (terminal 10aa) transmits image data about a photographic subject captured by the imaging unit 14a and sound data about sound input by the sound input unit 15a from the transmission and reception unit 11 to the relay device 30b via the communication network 2 (step S81). In the embodiment, image data having high image quality including three types of low resolution, medium resolution, and high resolution illustrated in FIG. 3A, FIG. 3B, and FIG. 3C, and sound data are transmitted. In accordance with this, the relay device 30b receives the image data having the above three types of resolution and the sound data at the transmission and reception unit 31. Then the data quality confirmation unit 33 searches the quality change management DB 3001 (see FIG. 10) while using, as a search key, the IP address "1.3.2.4" of the destination terminal (terminal 10db) and extracts corresponding image quality of image data to be relayed, so that the data quality confirmation unit 33 confirms the quality of an image of the image data to be relayed (step S82). In the embodiment, the confirmed image quality of image data is "high image quality" which is the same as the image quality of the image data received at the transmission and reception unit 31. Accordingly, the relay device 30b transfers the image data having unchanged image quality and the sound data having unchanged sound quality to the destination terminal (terminal 10db) using the image and sound data session sed (step S83). In accordance with this, the destination terminal (terminal 10db) receives the image data having high image quality including three types of low resolution, medium resolution, and high resolution, and the sound data at the transmission and reception unit 11. Then the display controlling unit 17 combines image data having three types of image quality and causes the display 120 to display an image and the sound output unit 15b can output sound based on the sound data.

Next, the delay detecting unit 18 of the terminal 10db detects a delay time of reception of image data received by the transmission and reception unit 11 at certain time intervals (every one second, for example) (step S84). In the embodiment, the following description continues on the assumption that the delay time is 200 (ms).

The transmission and reception unit 11 of the destination terminal (terminal 10db) transmits delay information indicating the delay time "200 (ms)" to the management system 50 via the communication network 2 using the management information session sei illustrated in FIG. 2 (step S85). In accordance with this, the management system 50 can determine the delay time and the IP address "1.3.2.4" of the terminal 10db serving as a transmitter of the delay information.

Next, the delay time managing unit 60 of the management system 50 searches the terminal management DB 5003 (see FIG. 12) while using, as a search key, the IP address "1.3.2.4" of the destination terminal (terminal 10db) to extract a corresponding terminal ID "01db." Further, in the session management table of the session management DB 5005 (see FIG. 14), the delay time managing unit 60 stores and manages the delay time "200 (ms)" indicated by the above delay information in a field of delay time in a record of the terminal ID "01db" (step S86).

Next, the quality determining unit 58 searches the quality management DB 5007 (see FIG. 15) while using, as a search key, the delay time "200 (ms)" and extracts corresponding image quality "medium image quality" of image data, so that the quality determining unit 58 determines the image quality "medium image quality" (step S87).

Next, the transmission and reception unit 51 extracts, from the storage unit 5000, the IP address of a relay device having the relay device ID "111b" associated with the terminal ID "01db" in the session management table in the session management DB (see FIG. 14) (step S88). The IP addresses of relay devices having corresponding relay device IDs are stored in the storage unit 5000 in advance.

Then the transmission and reception unit 51 transmits quality information indicating the "medium image quality" of image data determined in step S87 to the relay device 30b via the communication network 2 using the management information session sei illustrated in FIG. 2 (step S89). The quality information includes the IP address "1.3.2.4" of the destination terminal (terminal 10db) used as the search key in step S86 above. In accordance with this, in the relay device 30b, the quality change managing unit 34 associates, stores, and manages the IP address "1.3.2.4" of the terminal 10 (terminal 10db) of a transmission destination and the "medium image quality" of image data to be relayed in the quality change management DB 3001 (see FIG. 10) (step S90).

Next, the terminal 10aa further transmits image data having high image quality including three types of low resolution, medium resolution, and high resolution, and the sound data to the relay device 30b using the image and sound data session sed in the same manner as in step S81 (step S91). In accordance with this, in the relay device 30b, in the same manner as in step S82 above, the data quality confirmation unit 33 searches the quality change management DB 3001 (see FIG. 10) while using, as a search key, the IP address "1.3.2.4" of the destination terminal (terminal 10db) and extracts corresponding image quality "medium image quality" of image data to be relayed, so that the data quality confirmation unit 33 confirms the quality of an image of the image data to be relayed (step S92). In the embodiment, the confirmed image quality of image data is "medium image quality" which is lower than the "high image quality" of the image data received at the transmission and reception unit 31. Accordingly, the data quality changing unit 35 changes the quality of an image of image data by reducing the image quality of image data from "high image quality" to the "medium image quality" (step S93).

The transmission and reception unit 31 transmits image data in which the image quality of the above image data is changed to the "medium image quality" and sound data having unchanged sound quality to the terminal 10db via the communication network 2 using the image and sound data session sed (step S94). In accordance with this, the destination terminal (terminal 10db) receives the image data having the medium image quality including two types of low resolution and medium resolution and the sound data at the transmission and reception unit 11. Then the display controlling unit 17 combines image data having two types of resolution and causes the display 120 to display an image and the sound output unit 15b can output sound based on the sound data.

In this manner, if delay of reception occurs in the destination terminal (terminal 10db) that receives image data, the relay device 30b can change the quality of an image so as not to give a sense of discomfort to persons participating in a video conference.

### «Primary effects of embodiment»

As described above, according to the embodiment, a relay device is selected in consideration of not only a priority list on its own terminal side but also a priority list on the other transmission terminal side. Accordingly, it is possible to transmit and receive high-quality content data in a well-balanced manner upon performing communication between transmission terminals.

### (Additional description of embodiment)

The relay device 30, the management system 50, the program providing system 90, and the maintenance system 100 in the embodiment above may be configured with a single computer or may be configured with a plurality of computers to which units (functions or units) are divided and assigned arbitrarily. Further, if the program providing system 90 is configured with a single computer, a program to be transmitted by the program providing system 90 may be divided into a plurality of modules for transmission or may be transmitted without being divided. Further, if the program providing system 90 is configured with a plurality of computers, the plurality of modules may be transmitted from each of the computers.

Further, any one of a recording medium such as a CD-ROM in which the terminal program, the relay device program, or the transmission management program in the embodiment is stored, the HD 204 in which these programs are stored, and the program providing system 90 including the HD 204 is used as a program product within a country or outside the country in a case where the terminal program, the relay device program, and the transmission management program are provided to the user or the like.

Further, in the above embodiment, as an example of quality of an image of image data relayed by the relay device 30 in accordance with the quality change management table illustrated in FIG. 10 and the quality management table illustrated in FIG. 15, management is performed based mainly on resolution of an image of image data. However the management is not limited to this. As another example of quality, management may be performed based mainly on depth of image quality of image data, sampling frequency of sound in sound data, or a bit length of sound in the sound data. Further, the sound data may be divided into three types of resolution (high resolution, medium resolution, and low resolution) and transmitted and received.

Further, in FIG. 12 and FIG. 14, the reception date and time is managed. However, the management is not limited to this. At least the reception time from the reception date and time may be managed.

Further, in the above embodiment, the IP address of the relay device is managed in the storage unit 5000 and the IP address of the terminal is managed in the terminal management DB (see FIG. 12). However, the management is not limited to this. Relay device specifying information for specifying the relay device 30 on the communication network 2 or terminal specifying information for specifying the terminal 10 on the communication network 2 may manage a corresponding Fully Qualified Domain Name (FQDN). In this case, the IP address that corresponds to the FQDN is obtained via a Domain Name System (DNS) server in the related art. Further, the "relay device specifying information for specifying the relay device 30 on the communication network 2" may also be expressed as "relay device connection destination information indicating a connection destination of the relay device 30 on the communication network 2" or "relay device address information indicating an address of the relay device 30 on the communication network 2." In the same manner, the "terminal specifying information for specifying the terminal 10 on the communication network 2" may also be expressed as "terminal connection destination information indicating a connection destination of the terminal 10 on the communication network 2" or "terminal address information indicating an address of the terminal 10 on the communication network 2."

Further, in the above embodiment, the video conference terminal is described as an example of the transmission terminal. However, the transmission terminal is not limited to this but may include a phone system such as an Internet Protocol (IP) phone or an Internet phone. Further, the transmission terminal may be a smartphone, a mobile phone, a car navigation terminal, a wearable computer, or a video game console. The wearable computer includes a wrist watch, a head mounted display, and the like.

Further, in the above embodiment, image data and sound data are described as an example of content data. However, the content data is not limited to these types of data but may include touch data. In this case, a sense of touch by the user on one terminal side is transmitted to another terminal side. Further, the content data may be smell data. In this case, scent (smell) on one terminal side is transmitted to another terminal side. Further, the content data may be at least one of the image data, the sound data, the touch data, and the smell data.

Further, in the above embodiment, the video conference is held in the transmission system 1. However, the present invention is not limited to this. The transmission system 1 may be used for a meeting, a general conversation between family members or friends, or presentation of information in one direction.

Further, in the above embodiment, the terminal ID is used. However, the present invention is not limited to this. A user ID for identifying a user may be used.

The present application is based on and claims the benefit of priority of Japanese Priority Application No. 2014-072940 filed on March 31, 2014, the entire contents of which are hereby incorporated by reference.

### EXPLANATION OF REFERENCE NUMERALS

- 1: transmission system
- 10: transmission terminal
- 11: transmission and reception unit
- 16: selection unit
- 16a: summing unit
- 16b: determining unit
- 16c: deciding unit
- 17: display controlling unit
- 18: delay detecting unit
- 30: relay device
- 31: transmission and reception unit
- 32: state detecting unit
- 33: data quality confirmation unit
- 34: quality change managing unit
- 35: data quality changing unit
- 50: management system
- 51: transmission and reception unit
- 52: terminal authenticating unit
- 53: state managing unit
- 54: terminal extracting unit
- 55: terminal state obtaining unit
- 57: session managing unit
- 58: quality determining unit
- 59: storing and reading processing unit
- 60: delay time managing unit
- 70: router
- 90: program providing system
- 100: maintenance system
- 1000: storage unit
- 3000: storage unit
- 3001: quality change management DB
- 5000: storage unit
- 5002: authentication management DB
- 5003: terminal management DB
- 5004: destination list management DB
- 5005: session management DB
- 5007: quality management DB

### Related Art Document

### Patent Document

Patent Document 1: Japanese Unexamined Patent Application Publication No. 2008-227577

## Claims

1. A transmission terminal configured to transmit and receive content data via one of a plurality of relay devices, the transmission terminal comprising:
a storage unit configured to store first priority level information indicative of a priority level regarding use of each of the plurality of relay devices when used by the transmission terminal;
a reception unit configured to receive second priority level information indicative of a priority level regarding use of each of the relay devices when used by another transmission terminal, the second priority level information being transmitted by the other transmission terminal; and
a selection unit configured to select, based on the first priority level information and the second priority level information, one of the relay devices as a relay device to use.

2. The transmission terminal according to claim 1,
wherein in the first priority information, pieces of relay device identifying information to identify each of the relay devices are associated with priority levels for use of each of the relay devices, and
wherein in the second priority information, pieces of relay device identifying information to identify each of the relay devices are associated with priority levels for use of each of the relay devices.

3. The transmission terminal according to claim 2,
wherein the selection unit includes:
a summing unit configured to sum up, for each of the pieces of relay device identifying information, one of the priority levels in the first priority level information and one of the priority levels in the second priority level information and configured to calculate a total priority level; and
a deciding unit configured to decide, among the pieces of relay device identifying information, one piece of relay device identifying information to be used for the selection, wherein a highest total priority level is calculated for the one piece of relay device identifying information among the calculated total priority levels.

4. The transmission terminal according to claim 3,
wherein the selection unit includes:
a determining unit configured to determine whether there is one relay device that corresponds to the highest total priority level, and
wherein in response to determination that there is more than one relay device that corresponds to the highest total priority level, the deciding unit decides, as a piece of relay device identifying information to be used for the selection, one of the pieces of relay device identifying information about a given one relay device among the plurality of relay devices that correspond to the highest total priority level.

5. The transmission terminal according to any one of claims 1 to 4, wherein the transmission terminal is one of a video conference terminal, a smartphone, a mobile phone, a car navigation terminal, a wearable computer, and a video game console.

6. A transmission system comprising:
the transmission terminal according to any one of claims 1 to 4; and
the plurality of relay devices.

7. A selection method for selecting a relay device to be used by a transmission terminal, the transmission terminal being configured to transmit and receive content data via one of a plurality of relay devices, the selection method comprising:
creating first priority level information indicative of a priority level regarding use of each of the plurality of relay devices when used by the transmission terminal;
receiving, from another transmission terminal, second priority level information indicative of a priority level regarding use of each of the relay devices when used by the other transmission terminal; and
selecting, based on the first priority level information and the second priority level information, one of the relay devices as a relay device to use.

8. The selection method according to claim 7,
wherein in the first priority information, pieces of relay device identifying information to identify each of the relay devices are associated with priority levels for use of each of the relay devices, and
wherein in the second priority information, pieces of relay device identifying information to identify each of the relay devices are associated with priority levels for use of each of the relay devices.

9. The transmission terminal according to claim 8, wherein the selecting includes:
summing up, for each of the pieces of relay device identifying information, one of the priority levels in the first priority level information and one of the priority levels in the second priority level information and calculating a total priority level; and
deciding, among the pieces of relay device identifying information, one piece of relay device identifying information to be used for the selection, wherein a highest total priority level is calculated for the one piece of relay device identifying information among the calculated total priority levels.

10. The selection method according to claim 9, wherein the selecting includes:
determining whether there is one relay device that corresponds to the highest total priority level, and
wherein in response to determination that there is more than one relay device that corresponds to the highest total priority level, the deciding decides, as a piece of relay device identifying information to be used for the selection, one of the pieces of relay device identifying information about a given one relay device among the plurality of relay devices that correspond to the highest total priority level.

11. A non-transitory computer-readable recording medium storing a program to cause a computer to perform the selection method according to any one of claims 6 to 10.
